# EUROPÄISCHE PATENTSCHRIFT

(11) **EP 0 774 123 B1**
(45) Veröffentlichungstag und Bekanntmachung des Hinweises auf die Patenterteilung: **24.03.1999**
(21) Anmeldenummer: 95930445.2
(22) Anmeldetag: 11.08.1995
(51) Int. Cl.: G01N 35/00, G01N 21/76, B03C 1/28, G01N 21/03

(54) **MESSANORDNUNG UND VERFAHREN ZUR DURCHFÜHRUNG LUMINOMETRISCHER REIHENANALYSEN SOWIE MEHRFACHKÜVETTE ZUR AUFNAHME VON FLÜSSIGKEITSPROBEN HIERFÜR**
MEASUREMENT PROCESS AND ARRANGEMENT FOR CARRYING OUT LUMINOMETRIC SERIES ANALYSES AND MULTIPLE VESSEL FOR RECEIVING LIQUID SAMPLES THEREFOR
PROCEDE ET AGENCEMENT DE MESURE PERMETTANT D'EFFECTUER DES ANALYSES LUMINOMETRIQUES EN SERIE ET CUVE MULTIPLE DE RECEPTION D'ECHANTILLONS LIQUIDES

(30) Priorität: 17.08.1994 DE 4429155
(43) Veröffentlichungstag der Anmeldung: 21.05.1997
(60) Teilanmeldung: 98115960.1
(73) Patentinhaber: STRATEC Biomedical Systems Aktiengesellschaft, 75217 Birkenfeld (DE)
(72) Erfinder: LEISTNER, Hermann, D-75217 Birkenfeld (DE); SCHIESSL, Hans, D-75177 Pforzheim (DE)
(74) Vertreter: Wolf, Eckhard, Dr.-Ing.
(86) Internationale Anmeldenummer: EP9503188
(87) Internationale Veröffentlichungsnummer: WO9605514

(56) Entgegenhaltungen:
- EP-A- 0 355 823
- EP-A- 0 358 948
- EP-A- 0 371 265
- EP-A- 0 504 797
- WO-A-91/08462
- WO-A-93/13400
- DE-A- 3 926 462
- US-A- 4 227 815
- US-A- 4 251 159
- US-A- 5 186 827

## Beschreibung

Die Erfindung betrifft eine Meßanordnung zur Durchführung luminometrischer Reihenanalysen an zu untersuchende Reaktionskomponenten und diese bindende magnetisierbare Trägerpartikel enthaltenden Flüssigproben, mit einer in einer Förderstrecke zu einer Meßstation transportierbaren, die Flüssigprobe aufnehmenden Probenkammer, einem im Zuge des Transports mit seinem Magnetfeld auf die Probenkammer einwirkenden Dauermagnet, sowie einer vorzugsweise mit einer Absaug- und Spülvorrichtung bestückten Trennstation zur Entfernung der von den unter Einwirkung des Magnetfelds an einem Wandbereich der Probenkammer angehäuften Trägerpartikeln getrennten überschüssigen Reaktionskomponenten.

Die Erfindung betrifft ferner ein Verfahren zur luminometrischen Reihenanalyse, bei welchem eine mit einer zu untersuchende Reaktionskomponenten und diese bindende magnetisierbare Trägerpartikel enthaltenden Flüssigprobe befüllte Probenkammer in einer Förderstrecke zu einer Lumineszenz-Meßstelle transportiert wird, wobei im Zuge des Transports die Trägerpartikel während einer Trennphase unter der Einwirkung eines Magnetfelds in einem Sammelbereich der Probenkammerwand angehäuft und in einem die Trennphase abschließenden Waschprozeß überschüssige Reaktionskomponenten aus der Probenkammer entfernt werden.

Derartige Meßtechniken dienen vor allem in der medizinischen Diagnostik, lebensmittelchemischen Analytik, Biotechnik und Umwelttechnik zum spezifischen und quantitativen Nachweis kleinster Stoffmengen von Biomolekülen und Toxinen, wobei häufig eine große Anzahl von Proben verarbeitet werden muß. Für die Messung werden die in einer Probenflüssigkeit enthaltenen Zielsubstanzen in einer immunchemischen Reaktion mit einem spezifischen Antikörper markiert, der einen lumineszenzfähigen Marker (Luminogen) trägt. Zur Konzentration mit chemisch-pysikalischen Mitteln wird die so erhaltene Zielstruktur zusätzlich an ein mit spezifischen Antikörpern beschichtetes Magnetpartikel gekoppelt und durch Einwirkung eines Magnetfelds möglichst quantitativ vom flüssigen Ansatz getrennt. Dieser kann dann durch Absaugen oder Dekantieren entfernt werden. Der eigentliche Meßvorgang erfolgt nach Zugabe eines Startreagenz, das die Luminogene zum Leuchten anregt. Die dabei emittierten Fluoreszenz-Photonen werden von einem als Photomultiplier ausgebildeten Photodetektor, der das Probenvolumen in einer abgedunkelten Meßstation "betrachtet", aufgefangen und als Zählimpulse registriert. Anhand der in Form von auf integrierten Zählimpulsen ermittelten gesamten Photonenausbeute wird schließlich über eine Eichbeziehung die Konzentration der Zielsubstanz bestimmt.

Es ist eine Vorrichtung der eingangs angegebenen Art bekannt (DE 39 26 462 A1), bei welcher eine größere Anzahl von Proben in einzelnen Probenröhrchen in einer Förderstrecke einer Trennstation zugeführt wird. Während des Transports werden Dauermagnete im Umlauf in die Förderstrecke eingeführt und über einen Förderstreckenabschnitt mit jeweils zugeordneten Probenröhrchen mitgeführt. Alle Dauermagnete im Förderstreckenabschnitt sind gleich ausgerichtet und bewirken eine Anlagerung der magnetischen Feststoffteilchen an einer definierten Stelle der Innenwand der Probenröhrchen. Mit dieser Vorrichtung ist es zwar möglich, die Trenn- bzw. Waschprozedur sowie den nachfolgenden Meßvorgang vollautomatisch ablaufen zu lassen. Der gesamte Aufbau dazu ist jedoch mechanisch kompliziert und erfordert einen durch die Handhabung einer Vielzahl von Einzelröhrchen bedingten hohen Bedienungsaufwand. Vor allem aber wurde festgestellt, daß die Magnetpartikel bei ihrer Anlagerung an der Probenröhrchenwand aufgrund ihrer die Antikörper tragenden Beschichtung zur Verklumpung unter Einschluß freier Luminogene neigen. Diese verursachen dann bei der Lumineszenzmessung einen gewissen Rauschhintergrund, aus dem die Lichtsignale der Zielsubstanzen unterhalb einer dadurch gegebenen Nachweis-Grenzkonzentration nicht mehr herauszuheben sind.

Aus der EP-A-371265 ist eine Meßvorrichtung zur Messung der Chemilumineszenz an zu untersuchende Substanzen und diese bindende magnetische Mikropartikel enthaltenden Flüssigproben bekannt. Zur Aufnahme der Proben sind dort in einem Halter verbundene Probenröhrchen vorgesehen, welche an der Meßöffnung eines Photomultipliers vorbeitransportierbar sind, wobei gegenüber der Meßöffnung ein Dauermagnet stationär angeordnet ist.

Die EP-A-355823 zeigt die Anwendung von Mehrfachküvetten in einer Meßanordnung mit mehrstufiger Trennung von Magnetpartikeln. Zur Trennung der Magnetpartikel sind dort mehrere Dauermagnete im Winkelabstand voneinander an einem rotierenden Probenrad angeordnet. Nach jeder Abscheidung wird jedoch ein mechanisches Mischgerät zur Resuspension eingesetzt.

Aus der WO-A-91/08462 ist eine Mehrfachküvette zum Einsatz in einem optischen Meßinstrument und ein linearer Antriebsmechanismus für eine solche Küvette bekannt.

Eine Meßanordnung ähnlich der gattungsgemäßen Art mit mehreren im Abstand voneinander an einer Förderstrecke montierten Dauermagneten ist aus der EP-A-358948 bekannt. Die Magnete sind dort in zwei die Förderstrecke flankierenden Rahmenteilen paarweise einander gegenüberliegend angeordnet, wobei ihre Polflächen einander zugewandt sind. Um Magnetpartikel sowohl im oberen als auch unteren Bereich der Probengefäße anzuziehen, sind die Magnete an verschiedenen Stationen in unterschiedlichen Höhenpositionen montiert. Die Wirkung der paarweisen Magnetanordnung soll darin bestehen, daß die Entfernung, welche die Partikel zu ihrer Trennung von der Flüssigkeit zu durchlaufen haben, nur die Hälfte des Probengefäßdurchmessers beträgt.

Ausgehend hiervon liegt der Erfindung die Aufgabe zugrunde, eine Meßanordnung und ein Verfahren der eingangs angegebenen Art dahingehend weiterzuentwickeln, daß die Nachweisergebnisse bei erniedrigter Nachweisgrenze und geringerem Handhabungsaufwand schnell erhältlich sind.

Zur Lösung dieser Aufgabe werden die in den Patentansprüchen 1 und 20 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, mehrere Probenkammern als gemeinsam handhabbare Einheiten miteinander zu verbinden und diese in Kombination mit der Magnetfeldkonfiguration in optimaler Weise auf die Besonderheiten sowohl des magnetischen Trennprozesses als auch des optischen Meßvorgangs abzustimmen. Zu diesem Zweck wird gemäß der Erfindung vorgeschlagen, daß mehrere jeweils eine Probenkammer bildende Küvetteneinheiten reihenförmig zu einer Mehrfachküvette miteinander verbunden werden, und daß entlang der Förderstrecke mindestens zwei Dauermagnete im Abstand zueinander angeordnet werden, wobei die Dauermagnete mit ihrem Magnetfeld die an ihnen vorbeitransportierbaren Küvetteneinheiten nacheinander und abwechselnd von einander gegenüberliegenden Wandbereichen her durchdringen. Die Einwirkung der stationär auf beiden Seiten der Förderstrecke angeordneten Magnete führt auf einfache Weise dazu, daß sich während des Küvettentransports die angezogenen magnetisierbaren Tägerpartikel abwechselnd auf der einen und der anderen Seite der Probenkammer anhäufen, wobei sich während des Durchzugs durch die Probenflüssigkeit an den Trägerpartikeln anhaftende freie Luminogene wieder in der Probenflüssigkeit verteilen.

Gemäß einer bevorzugten Ausgestaltung der Erfindung besteht jeder Dauermagnet als Doppelmagnet aus zwei mit entgegengesetzter Polung parallel zueinander angeordneten, vorzugsweise zylindrischen Stabmagneten, wobei die Doppelmagnete mittels eines Drehantriebs um eine zu den Stabmagneten zentrisch achsparallele, vorzugsweise horizontal und quer zur Förderstrecke verlaufende Drehachse drehbar sind. Dadurch wird ein keulenförmig in die Küvetteneinheiten eingreifendes Magnetfeld erzeugt, unter dessen Einwirkung sich die Trägerpartikel auf langen Spiralbahnen bewegen und an der Küvettenwand als Pellet punktförmig ansammeln. Das Pellet kann dann im Scheitelbereich der elliptischen Feldlinien eines nachgeordnet spiegelsymmetrisch einwirkenden Doppelmagneten mit ausreichender Anziehungskraft erfaßt werden, ohne daß sich Trägerpartikel in feldlinienarmen Toträumen der Einzelküvette absetzen.

Zur Erzeugung eines möglichst hohen Magnetfelds bei geringer Streufeldausdehnung sind die beiden Stabmagnete vorzugsweise aus einer Metallegierung der seltenen Erden gebildet und an ihren von der Förderstrecke abgewandten ungleichnamigen Polen über ein Joch magnetisch gekoppelt. Ein hohes, stark gebündeltes Magnetfeld ermöglicht eine schnelle und wirksame Konzentration der Magnetpartikel und damit einen hohen Probendurchsatz.

Um die Feldeinwirkung im wesentlichen auf die momentan vorbeitransportierte Küvetteneinheit zu begrenzen, sind die beiden Stabmagnete jedes Doppelmagnets durch eine vorzugsweise aus Kunststoff bestehende Trennschicht mit einem ungefähr der lichten Querschnittsweite der Küvetteneinheiten entsprechenden Abstand starr miteinander verbunden.

Eine getaktete Einwirkung von Permanentmagnetfeldern auf die einzelnen vorbeibewegten Küvetteneinheiten kann dadurch erreicht werden, daß die Doppelmagnete entlang eines Förderstreckenabschnitts im Abstand benachbarter Küvetteneinheiten angeordnet sind.

Zur Vorkonzentration ist am Anfang des Förderstreckenabschnitts ein nicht drehbarer Doppelmagnet mit ungefähr im Abstand benachbarter Küvetteneinheiten gehalterten Stabmagneten waagerecht angeordnet. Dieser Doppelmagnete durchsetzt mit seinem weiträumiger wirksamen Magnetfeld das gesamte Probenkammervolumen und sammelt damit auch Trägerpartikel aus Bereichen, die von den nachfolgenden Doppelmagneten mit ihrem stärker gebündelten Magnetfeld nicht angezogen werden können.

Der Trennprozeß erfolgt vorteilhafterweise in aufeinanderfolgenden Schritten durch mindestens eine Gruppe von drei einander benachbarten Doppelmagneten, von denen die in Förderrichtung beiden letzten auf gleicher Seite der Förderstrecke und der erste auf der dazu gegenüberliegenden Seite angeordnet sind, und durch eine an der Position des letzten Doppelmagneten angeordnete Trennstation. Die ersten beiden Doppelmagnete dienen dabei zum wechselseitigen Durchzug der Trägerpartikel durch die Probenflüssigkeit, während der letzte Doppelmagnet das bereits angehäufte Pellet weiter verdichtet und von der Absaugvorrichtung der Trennstation fernhält.

Eine weitere vorteilhafte Ausgestaltung der Erfindung sieht vor, daß die Küvetteneinheiten einen unteren Meßkammerbereich und einen darüberliegenden, sich nach oben zu einer Beschickungsöffnung hin erweiternden Beschickungsbereich aufweisen. Dadurch besteht auch bei kleinem Meßvolumen ausreichend Eingriffsraum für eine von oben her absenkbare Absaug- und Spülvorrichtung.

Für die Bedingungen des optischen Meßvorgangs ist es von Vorteil, wenn die Küvetteneinheiten im Querschnitt trapezförmig oder dreieckförmig ausgebildet sind und ein an einer Seitenwand den gesamten Meßkammerbereich überdeckendes, transparentes optisches Meßfenster aufweisen. Das großflächige Meßfenster erhöht die Austrittsfläche für die Lumineszenzstrahlung in den detektorseitigen Halbraum, während der verengte rückwärtige Probenkammeraum, in welchem die emittierte Strahlung in der trüben Trägerpartikelsuspension ohnehin hauptsächlich reabsorbiert wird, noch genügend Querschnittsfläche für den Eingriff einer Absaugvorrichtung bietet.

Eine kostengünstig herstellbare, formstabile Mehrfachküvette weist als einstückiges Formteil aus Kunststoff vorzugsweise sechs Küvetteneinheiten auf, die über seitliche, in Höhe der Beschickungsbereiche verlaufende vertikale Verbindungsstege und obere, in Höhe der Beschickungsöffnungen ausgebildete horizontale Verbindungsflächen starr miteinander verbunden sind.

Die Handhabung der Mehrfachküvette bei der Einführung in die Förderstrecke kann durch an ihren stirnseitigen, durch vertikale Querstege gebildeten Enden jeweils schräg zu den Verbindungsflächen und den meßfensterseitigen Verbindungsstegen angestellte Einführschrägen erleichtert werden.

Vorteilhafterweise ist die Mehrfachküvette mittels eines Schrittschaltwerks in einer Schrittbewegung in ihrer Längsrichtung in der Förderstrecke transportierbar. Dadurch ist es möglich, den Transportvorgang auf einfache Weise in den durch mehrere zeitlich aufeinanderfolgende Verfahrensschritte geprägten Meßablauf zu integrieren.

Das Übersprechen von Lumineszenzstrahlung zwischen den Küvetteneinheiten bzw. die Lichtleitung zwischen denselben kann durch eine unter Freihaltung der Meßfenster der Küvetteneinheiten aufgerauhte, matte Oberfläche der Mehrfachküvette verringert werden. Ein weitere Verbesserung in dieser Hinsicht läßt sich dadurch erreichen, daß die Verbindungsstege an der Meßfensterseite und der gegenüberliegenden Rückseite der Mehrfachküvette jeweils ein Ausstreufenster aufweisen. Ein zusätzlicher Nutzen der Ausstreufenster hinsichtlich einer Transportfunktion ergibt sich dadurch, daß die meßfensterseitigen Ausstreufenster als an den Verbindungsstegen stufenförmig zurückstehende oder vorspringende Transportanschläge ausgebildet sind, die über eine Auflaufschräge mit einer Schaltklinke des Schrittschaltwerks in Eingriff kommen, und daß die rückseitigen Ausstreufenster als Rastsicken für den Eingriff eines die Schaltschrittlage der Mehrfachküvette sichernden Kugeldruckstücks ausgebildet sind.

Zur Verdrehsicherung weist die Mehrfachküvette vorteilhafterweise außermittig angeordnete, an den Verbindungsstegen ausgebildete, nach unten geöffnete Zentrierausnehmungen für den Eingriff einer Zentriergabel auf.

Um Restflüssigkeit beim Absaugvorgang einer in die Küvette absenkbaren Absaugnadel der Absaugvorrichtung zuzuführen, können die Küvetteneinheiten einen von ihrer Meßfensterseite weg zur gegenüberliegenden Rückseite hin nach unten geneigten Boden aufweisen.

Verfahrensmäßig wird die vorstehend genannte Erfindungsaufgabe dadurch gelöst, daß die Trägerpartikel während der Trennphase unter Einwirkung von mindestens zwei die Probenkammer zeitlich nacheinander und abwechselnd von gegenüberliegenden Wandbereichen her durchdringenden Magnetfeldern zwischen zwei räumlich getrennten Sammelbereichen durch die Flüssigprobe hindurchgezogen werden.

Bevorzugterweise werden die Trägerpartikel unter der Einwirkung von jeweils mittels zweier entgegengesetzt gepolter, um eine gemeinsame Zentralachse gedrehter stabförmiger Permanentmagneten erzeugten rotierenden Magnetfeldern auf Spiralbahnen durch die Flüssigprobe hindurchgezogen und in den Sammelbereichen als Pellet angehäuft. Auf den langen Spiralbahnen ergibt sich eine effektive Vereinzelung der vorher angehäuften Trägerpartikel und damit eine erhöhte Ablösung von nicht an die Zielsubstanz gebundenen freien Überschuß-Luminogenen.

Die letztgenannten können dadurch aus der Probe entfernt werden, daß der Waschprozeß bei als Pellet an der Probenkammerwand angelagerten Magnetpartikeln unter aufrechterhaltener Einwirkung des rotierenden Magnetfelds durch Einspritzen und Absaugen einer Waschflüssigkeit ausgeführt wird. Zur weiteren Erhöhung der Nachweisempfindlichkeit bzw. Unterdrückung des durch freie Luminogene verursachten Störpegels können im Zuge des Transports der Probenkammer mehrere hintereinanderfolgende Trennphasen und Waschprozesse vorgesehen sein.

Ein kontinuierlicher, automatisierbarer Durchsatz von Proben kann dadurch ermöglicht werden, daß mehrere Probenkammern als reihenförmig miteinander verbundene, vorzugsweise dreiseitig-prismatisch geformte Küvetteneinheiten einer Mehrfachküvette gleichzeitig in der Förderstrecke transportiert werden. Die Mehrfachküvetten können dabei hintereinander in die Förderstrecke eingeführt und als zusammenhängender Küvettenzug in ihrer Längsrichtung in der Förderstrecke in einer Schrittbewegung transportiert werden.

Im folgenden wird die Erfindung anhand eines in der Zeichnung in schematischer Weise dargestellten Ausführungsbeispiels näher erläutert. Es zeigen
- Fig. 1: bis 3 eine Mehrfachküvette mit sechs Küvetteneinheiten in Vorderseitenansicht, Draufsicht und Rückseitenansicht;
- Fig. 4: eine ausschnittsweise vergrößerte Darstellung einer Küvetteneinheit der Mehrfachküvette in der Draufsicht gemäß Fig. 2;
- Fig. 5: einen Schnitt durch die Probenkammer der Einzelküvette entlang der Schnittlinie V-V der Fig. 4;
- Fig. 6: einen Schnitt entlang der Schnittlinie VI-VI der Fig. 4;
- Fig. 7: a eine Meßanordnung zur Durchführung luminometrischer Reihenanalysen in einer Draufsicht, und

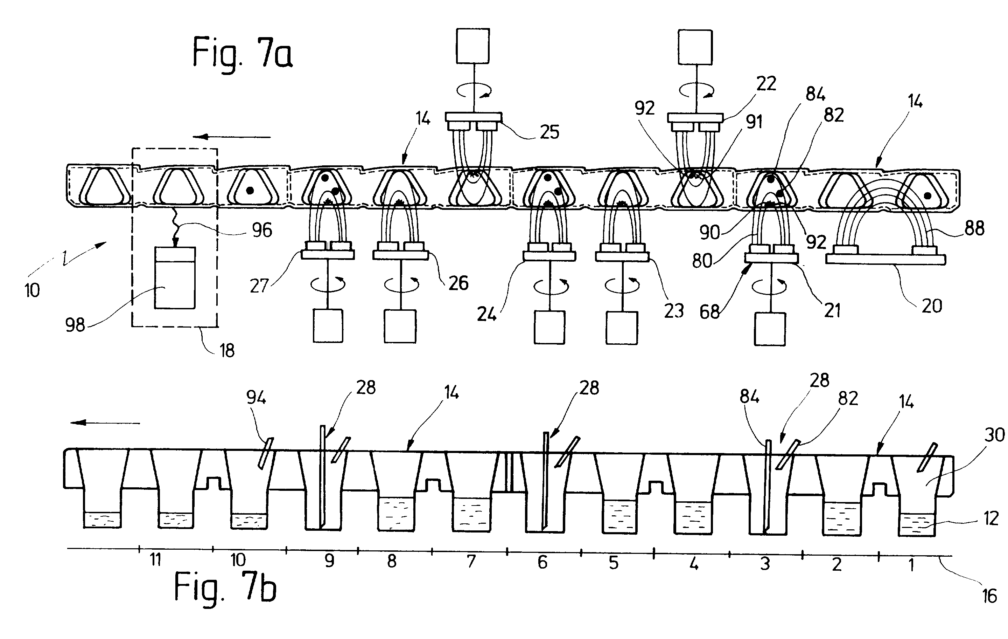

- Fig. 7: b die Meßanordnung nach Fig. 8a in einer meßfensterseitigen Ansicht der Küvetteneinheiten in ihren jeweiligen Transportpositionen in der Förderstrecke; und
- Fig. 8: eine vergrößerte Darstellung eines in der Meßanordnung nach Fig. 7a verwendeten hufeisenmagnetartig ausgebildeten Doppelmagneten;

Die in Fig. 7a und b dargestellte Meßanordnung 10 dient zur Durchführung luminometrischer Reihenanalysen an Flüssigproben, in denen nachzuweisende Zielsubstanzen und mit diesen in einer immunchemischen Nachweisreaktion verbindbare Markiersubstanzen sowie magnetisierbare Trägerpartikel enthalten sind. Die Flüssigproben 12 werden in einer Mehrfachküvette 14 entlang einer Förderstrecke 16 zu einer Meßstation 18 transportiert, wobei während des Transports als Doppelmagnete 68 ausgebildete Dauermagnete 20 - 27 und Trennstationen 28, die zur Abtrennung überschüssiger Markiersubstanz bestimmt sind, auf die Mehrfachküvette 14 einwirken.

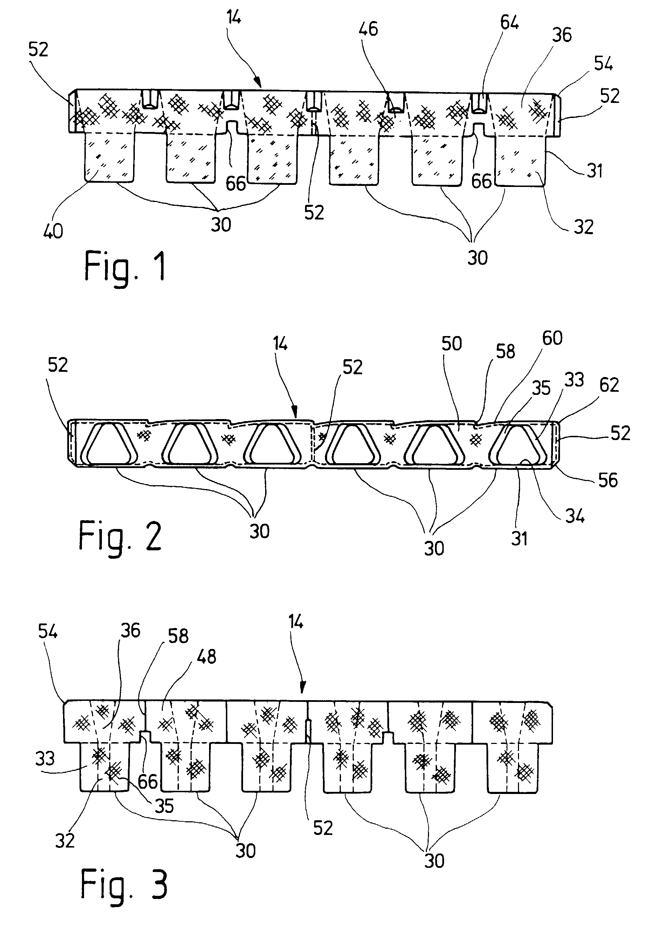

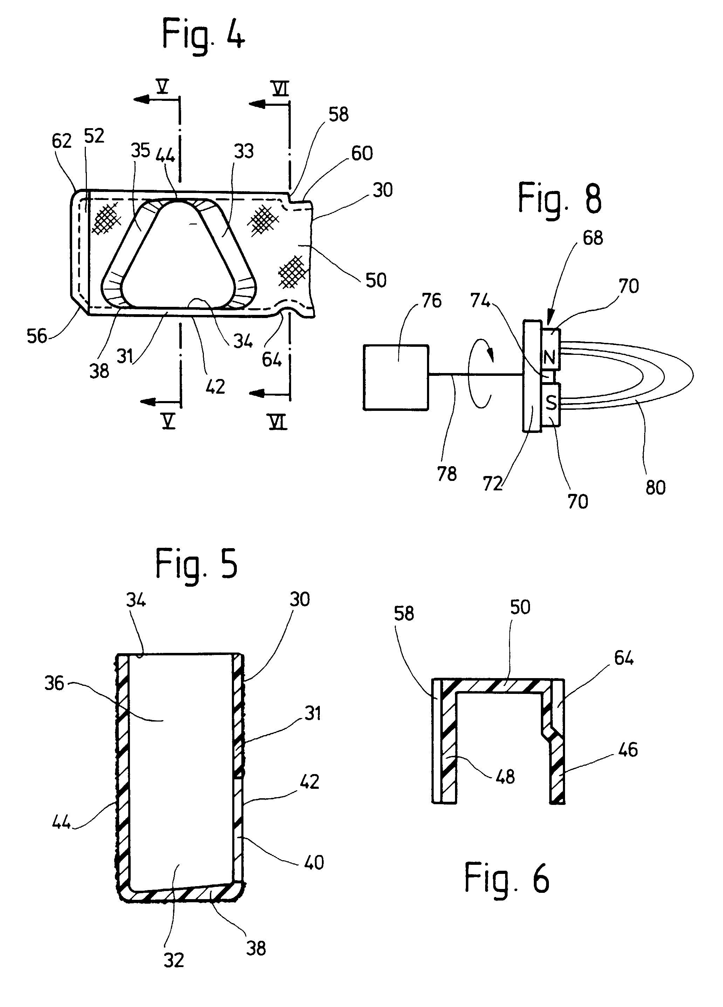

Die in den Fig. 1 bis 6 dargestellte Mehrfachküvette 14 ist als einstückiges Formteil aus einem lichtdurchlässigen Kunststoff gebildet und weist sechs in gleichem Abstand voneinander reihenförmig miteinander verbundene Küvetteneinheiten 30 auf. Die als dreiseitig-prismatischer Hohlkörper ausgebildeten Küvetteneinheiten 30 besitzen einen unteren Meßkammerbereich 32 und einen darüberliegenden, sich nach oben zu einer Beschickungsöffnung 34 hin erweiternden Beschickungsbereich 36. Eine Seitenwand 31 der im Querschnitt dreieckförmigem Küvetteneinheiten 30 ist im Meßkammerbereich 32 als bis zum Küvettenboden 38 reichendes, oberflächenpoliertes transparentes Meßfenster 40 ausgebildet, während die übrigen Seitenwände 33,35 eine außen rauhe, mattierte Oberfläche aufweisen. An ihren Verbindungsstellen sind die Seitenwände 31,33,35 durch innenkonkave Wandbereiche miteinander verbunden. Der Küvettenboden 38 ist von der Meßfensterseite 42 zur gegenüberliegenden Rückseite 44 hin nach unten geneigt. Die starre Verbindung der Küvetteneinheiten 30 zu einer Mehrfachküvette 14 wird durch in Höhe der Beschickungsbereiche 36 verlaufende meßfensterseitige und rückseitige Verbindungsstege 46,48 und durch in Höhe der Beschickungsöffnungen 34 verlaufende obere Verbindungsflächen 50 erreicht, wobei die Mehrfachküvette 14 über stirn- und mittenseitig angeordnete Querstege 52 zusätzlich ausgesteift ist. Auch die Verbindungsstege 46,48, die Verbindungsflächen 50 und die Querstege 52 weisen eine aufgerauhte Oberflächenstruktur auf.

Zur Einführung in die Förderstrecke 16 ist die Mehrfachküvette 14 mit an ihren stirnseitigen Enden jeweils schräg zu den Verbindungsflächen 50 und den meßfensterseitigen Verbindungsstegen 46 angestellte Einführschrägen 54,56 versehen. Um den Transport in der Förderstrecke 16 mittels eines nicht dargestellten Schrittschaltwerks zu ermöglichen, besitzt die Mehrfachküvette 14 an ihren rückseitigen Verbindungsstegen 48 stufenförmig nach innen stehende Transportanschläge 58, die über eine Auflaufschräge 60 mit einer Schaltklinke des Schrittschaltwerks in Eingriff kommen. Dabei dient auch die stirnseitig rückwärtige, nicht abgeschrägte Kante 62 als Transportanschlag. Ferner sind an den meßfensterseitigen Verbindungsstegen 46 den Transportanschlägen 58 gegenüberliegende Rastsicken 64 für den Eingriff eines die Schaltschrittlage der Mehrfachküvette 14 sichernden Kugeldruckstücks ausgebildet. Zur Verdrehsicherung beim Einsetzen der Mehrfachküvette 14 in die Förderstrecke 16 befinden sich in den Verbindungsstegen 46,48 an zwei bezüglich der Anordnung der Küvetteneinheiten 30 asymmetrischen Positionen einander gegenüberliegend ausgebildete, nach unten geöffnete Zentrierausnehmungen 66 für den Eingriff einer Zentriergabel.

Wie in Fig. 8 dargestellt, besteht jeder Doppelmagnet 68 bestehen jeweils aus zwei mit engegengesetzter Polung parallel zueinander angeordneten zylindrischen Stabmagneten 70, die über ein Joch 72 zu einer hufeisenmagnetartigen Anordnung gekoppelt sind. Die beiden Stabmagnete 70 werden durch eine aus Kunststoff bestehende Trennschicht 74 in einem ungefähr der Meßfensterbreite der Küvetteneinheiten 30 entsprechenden Abstand voneinander gehalten. Die so gebildeten Doppelmagnete 68 sind mittels eines Drehantriebs 76 um eine zu den Stabmagneten 70 zentrisch achsparallele Drehachse 78 drehbar und erzeugen dabei ein rotierendes Magnetfeld 80, das sich keulenförmig in den vor ihren freien Polen liegenden Halbraum erstreckt.

Gemäß Fig. 7 sind die einzelnen drehbaren Doppelmagnete 21-27 an stationären Positionen 3-9 im Abstand benachbarter Küvetteneinheiten 30 der Mehrfachküvette 14 entlang der Förderstrecke 16 zu beiden Seiten derselben mit quer zur Förderstrecke 16 ausgerichteten Drehachsen angeordnet. Am Anfang der Förderstrecke 16 (Position 1 und 2) ist ein nicht drehbarer Doppelmagnet 20 waagerecht angeordnet, dessen Stabmagnete ungefähr im Abstand zweier benachbarter Küvetteneinheiten 30 gehaltert sind.

Entlang der Förderstrecke 16 sind weiterhin mehrere mit oberhalb der transportierten Mehrfachküvetten 14 angeordneten Absaug- und Spülvorrichtungen versehene Trennstationen 28 vorgesehen, die programmgesteuert so absenkbar sind, daß sie mit einer Einspritznadel 82 für Waschflüssigkeit in den Beschickungsbereich 36 einer darunter befindlichen Küvetteneinheit 30 und mit einer Absaugnadel 84 im rückwärtigen Bereich der Küvetteneinheit 30 bis zum Küvettenboden 38 eintauchen.

Zur Durchführung einer Messung wird das flüssige Untersuchungsgut 12 mit den darin befindlichen nachzuweisenden Zielsubstanzen zusammen mit einem Überschuß einer Antikörper gegen die Zielsubstanz sowie Luminogene aufweisenden Markiersubstanz in die Küvetteneinheiten 30 gegeben. Zugleich werden im Untersuchungsgut 12 magnetisierbare Trägerpartikel aus Eisen suspendiert, die eine Korngröße von etwa 10µm aufweisen und deren Außenseite mit einer Latexschicht behaftet ist, die ebenfalls spezifische Antikörper gegen die Zielsubstanz trägt.

Die Antikörper der Trägerpartikel und der Markiersubstanz "erkennen" die nachzuweisenden Zielmoleküle und binden sie in einer immunchemischen Reaktion. Dabei bilden sich spezifische Komplexe aus Trägerpartikeln und Molekülen der Ziel- und Markiersubstanz. In einer Inkubationsphase von der Größenordnung einiger Minuten bis Stunden wird die Reaktion bei konstanter Temperatur weitgehend ins Gleichgewicht gebracht. Der eigentliche Nachweis erfolgt auf optischem Wege, indem die Luminogene in der Meßstation 18 zum Leuchten angeregt und die Ausbeute der dabei erzeugten Lumineszenzstrahlung bestimmt wird. Um das Meßergebnis nicht zu verfälschen, müssen die freien, nicht an Zielmoleküle gebundenen Luminogene vor der Lumineszenzmessung aus der Probe entfernt werden. Dazu wird das Untersuchungsgut 12 in der nachfolgend beschriebenen Weise einem während des Tansports zur Meßstation 18 ablaufenden Trennverfahren unterzogen, das entsprechend einer schrittweisen Transportbewegung der Küvetteneinheiten 30 schrittweise aus-geführt wird.

Zunächst werden die mit den Proben beladenen Mehrfachküvetten 14 von einer nicht dargestellten automatischen Handhabungseinheit der Meßanordnung 10 in die Förderstrecke 16 eingeführt. Dann wird die momentan an der Eingangsposition 1 der Förderstrecke 16 sich befindende Küvetteneinheit 30 mit zusätzlicher Pufferflüssigkeit beladen (Injektionsnadel 86) und das Untersuchungsgut über die Dauer von zwei Transportschritten dem weiträumig wirksamen Magnetfeld 88 des ersten, statischen Doppelmagneten 20 ausgesetzt. Unter der Einwirkung des Magnetfelds 88 werden die Eisenteilchen im Meßkammerbereich 32 an der meßfensterseitigen Innenfläche vorkontrahiert. An der nächsten Position (Position 3) verdichtet ein quer von der gleichen Seite der Förderstrecke 16 her einwirkender, sich drehender Doppelmagnet 21 die angesammelten Magnetpartikel zu einem punktförmigen Pellet 92. Die Verdichtung wird dabei durch das rotierende Magnetfeld 80 bewirkt, wobei sich die Eisenpartikel auf Spiralbahnen in den Bereich höherer Feldstärken bewegen und im Zentrum des ellipsoidförmigen Magnetfelds 80 an der Innenseite des Meßfensters 40 in einem Sammelbereich 90 ansammeln. Dabei greift das in seiner Konfiguration der Innenkontur der Küvetteneinheit 30 näherungsweise entsprechende Magnetfeld 80 des Doppelmagneten 68 mit ausreichender Anziehungskraft bis zur gegenüberliegenden Rückseite 44. Durch die konkaven Wandverbindungen der Seitenwände 31,33,35 der Einzelküvetten 30 wird zudem verhindert, daß sich Trägerpartikel in ansonsten vom Magnetfeld 80 nicht wirksam erreichbaren Eckräumen sedimentieren. Nach der so erzielten Trennung erfolgt an derselben Position 3 die Absaugung des verbleibenden Untersuchungsguts. Dazu dient die unter Einhaltung eines ausreichend großen Abstands zu dem Pellet 92 in den rückwärtigen Meßkammerbereich 32 eintauchbare Absaugnadel 84, wobei das Pellet 92 unter Aufrechterhaltung des Magnetfelds 80 an der Seitenwand anhaftet. Zusammen mit der abgesaugten Flüssigkeit wird das nicht gebundene Luminogen weitgehend entfernt. Anschließend erfolgt eine Neuzugabe von Waschflüssigkeit mittels der Einspritznadel 82. An der nächsten Transportposition 4 wird das Pellet im Scheitelbereich des von der Rückseite 44 der Küvetteneinheit 30 her eindringenden Magnetfelds des nächsten Doppelmagneten 22 erfaßt und in der Waschflüssigkeit spiralig verwirbelt, so daß die darin noch eingeschlossen freien Luminogene wieder in Lösung kommen. Nach Formation eines Pellets 92 folgt in den nächsten beiden Transportschritten 5 und 6 unter der Einwirkung der an den entsprechenden Positionen von der Meßfensterseite 42 her eingreifenden Doppelmagnete 23,24 eine erneute Verwirbelung und Anhäufung der Trägerpartikel am Meßfenster 40, gefolgt von einem weiteren Absaug- und Einspritzvorgang. Dieselben Verfahrensschritte werden schließlich an den darauffolgenden Transportpositionen 7,8,9 unter sukzessiver Einwirkung einer weiteren Dreiergruppe von Doppelmagneten 25,26,27 wiederholt und durch eine Resuspendierung (Einspritznadel 94) der Trägerpartikel bei Position 10 abgeschlossen. Anschließend wird die Küvetteneinheit 30 der abgedunkelten Meßstation 18 zugeführt, wo eine Lumineszenzreaktion der Luminogene durch Zugabe weiterer Reagenzien aktiviert wird. Die durch das Meßfenster 40 hindurchtretende, im Verlauf einiger Sekunden abklingende Lumineszenzstrahlung 96 wird von dem Photodetektor 98 erfaßt und integral unter Berücksichtigung von Eichbeziehungen und Eichmessungen hinsichtlich der Konzentration der Zielsubstanz ausgewertet.

Zusammenfassend ist folgendes festzustellen: Die Erfindung bezieht sich auf eine Meßanordnung und ein Verfahren zur Durchführung luminometrischer Reihenanalysen an zu untersuchende Reaktionskomponenten und diese bindende magnetisierbare Trägerpartikel enthaltenden Flüssigproben 12. Die Proben werden in Küvetteneinheiten 30 einer Mehrfachküvette 14 in einer Förderstrecke 16 zu einer Meßstation 18 transportiert, wo die Konzentration der nachzuweisenden Zielsubstanz mittels einer Lumineszenzmessung bestimmt wird. Zur Entfernung überschüssiger, die Messung verfälschender Reaktionskomponenten werden die Mehrfachküvetten 14 an mehreren rotierenden Dauermagneten 20 - 27 vorbeitransportiert, die mit ihrem keulenförmigen Magnetfeld 80 die Küvetteneinheiten 30 nacheinander und von einander gegenüberliegenden Wandbereichen 40,44 her durchdringen. Dabei werden die Trägerpartikel auf Spiralbahnen durch die Probenflüssigkeit gezogen und als Pellet 92 konzentriert. Die von den Trägerpartikeln abgelösten überschüssigen Reaktionskomponenten können dann in einem Spül- und Absaugprozeß entfernt werden.

## Patentansprüche

1. Meßanordnung zur Durchführung luminometrischer Reihenanalysen an zu untersuchende Reaktionskomponenten und diese bindende magnetisierbare Trägerpartikel enthaltenden Flüssigproben (12), mit einer in einer Förderstrecke (16) zu einer Meßstation (18) transportierbaren, die Flüssigprobe aufnehmenden Probenkammer (30), einem im Zuge des Transports mit seinem Magnetfeld (80) auf die Probenkammer (30) einwirkenden Dauermagnet (68), sowie einer vorzugsweise mit einer Absaug- und Spülvorrichtung bestückten Trennstation (28) zur Entfernung der von den unter Einwirkung des Magnetfelds (80) an einem Wandbereich der Probenkammer (30) angehäuften Trägerpartikeln getrennten überschüssigen Reaktionskomponenten, **gekennzeichnet durch** eine aus reihenförmig miteinander verbundenen, jeweils eine Probenkammer bildenden Küvetteneinheiten (30) bestehende Mehrfachküvette (14), und mindestens zwei im Abstand entlang der Förderstrecke (16) angeordnete Dauermagnete (20-27), die mit ihrem Magnetfeld (88,80) die an ihnen vorbeitransportierbaren Küvetteneinheiten (30) nacheinander und abwechselnd von einander gegenüberliegenden Wandbereichen (40,44) her durchdringen.

2. Meßanordnung nach Anspruch 1, **dadurch gekennzeichnet,** daß jeder Dauermagnet als Doppelmagnet (68) aus zwei mit entgegengesetzter Polung parallel zueinander angeordneten, vorzugsweise zylindrischen Stabmagneten (70) besteht, und daß die Doppelmagnete (68) mittels eines Drehantriebs (76) um eine zu den Stabmagneten (70) zentrisch achsparallele, vorzugsweise horizontal und quer zur Förderstrecke (16) verlaufende Drehachse (78) drehbar sind.

3. Meßanordnung nach Anspruch 2, **dadurch gekennzeichnet**, daß die beiden vorzugsweise aus einer Metalllegierung der seltenen Erden bestehenden Stabmagnete (70) jedes Doppelmagnets (68) an ihren von der Förderstrecke (16) abgewandten ungleichnamigen Polen über ein Joch (72) magnetisch gekoppelt sind.

4. Meßanordnung nach Anspruch 2 oder 3, **dadurch gekennzeichnet,** daß die beiden Stabmagnete (70) jedes Doppelmagnets (68) durch eine vorzugsweise aus Kunststoff bestehende Trennschicht (74) mit einem ungefähr der lichten Querschnittsweite der Küvetteneinheiten (30) entsprechenden Abstand starr miteinander verbunden sind.

5. Meßanordnung nach einem der Ansprüche 2 bis 4, **dadurch gekennzeichnet,** daß die Doppelmagnete (68; 21-27) im Abstand benachbarter Küvetteneinheiten (30) der Mehrfachküvette(14) entlang der Förderstrecke (16) angeordnet sind.

6. Meßanordnung nach einem der Ansprüche 2 bis 5, **dadurch gekennzeichnet,** daß am Anfang der Förderstrecke (16) ein nicht drehbarer Doppelmagnet (20) waagerecht angeordnet ist, dessen Stabmagneten ungefähr im Abstand zweier benachbarter Küvetteneinheiten (30) gehaltert sind.

7. Meßanordnung nach einem der Ansprüche 2 bis 6, **gekennzeichnet durch** mindestens eine Gruppe (22,23, 24;25,26,27) von drei entlang der Förderstrecke einander benachbarten Doppelmagneten, von denen die beiden in Förderrichtung letzten auf der gleichen Seite und der erste auf der dazu gegenüberliegenden Seite der Förderstrecke (16) angeordnet sind, und durch eine an der Position (Position 6,9) des letzten Doppelmagneten (24,27) angeordnete Trennstation (28).

8. Meßanordnung nach einem der Ansprüche 1 bis 7, **dadurch gekennzeichnet,** daß die Küvetteneinheiten (30) einen unteren Meßkammerbereich (32) und einen darüberliegenden, sich nach oben zu einer Beschickungsöffnung (34) hin erweiternden Beschickungsbereich (36) aufweisen.

9. Meßanordnung nach einem der Ansprüche 1 bis 8, **dadurch gekennzeichnet,** daß die Küvetteneinheiten (30) im Querschnitt trapezförmig oder dreieckförmig ausgebildet sind und ein an einer Seitenwand (31) den Meßkammerbereich (32) überdeckendes, transparentes optisches Meßfenster (40) aufweisen.

10. Meßanordnung nach Anspruch 8 oder 9, **dadurch gekennzeichnet,** daß die vorzugsweise als einstückiges Formteil aus Kunststoff ausgebildete Mehrfachküvette (14) vier bis acht, vorzugsweise sechs Küvetteneinheiten (30) aufweist, die über seitliche, in Höhe der Beschickungsbereiche (36) verlaufende vertikale Verbindungsstege (46,48) und obere, in Höhe der Beschickungsöffnungen (34) ausgebildete horizontale Verbindungsflächen (50) starr miteinander verbunden sind.

11. Meßanordnung nach Anspruch 10, **dadurch gekennzeichnet**, daß die Mehrfachküvette (14) an ihren stirnseitigen, durch vertikale Querstege (52) gebildeten Enden jeweils schräg zu den Verbindungsflächen (50) und den meßfensterseitigen Verbindungsstegen (46) angestellte Einführschrägen (54,56) zur Einführung in die Förderstrecke (16) aufweist.

12. Meßanordnung nach einem der Ansprüche 1 bis 11, **dadurch gekennzeichnet,** daß die Mehrfachküvette (14) vorzugsweise mittels eines Schrittschaltwerks in einer Schrittbewegung in ihrer Längsrichtung in der Förderstrecke (16) transportierbar ist.

13. Meßanordnung nach einem der Ansprüche 9 bis 12, **dadurch gekennzeichnet**, daß die Mehrfachküvette (14) eine unter Freihaltung der Meßfenster (40) der Küvetteneinheiten (30) aufgerauhte, matte Oberfläche aufweist.

14. Meßanordnung nach einem der Ansprüche 10 bis 13, **dadurch gekennzeichnet,** daß die Verbindungsstege (46,48) an der Meßfensterseite (42) und der gegenüberliegenden Rückseite (44) der Mehrfachküvette (14) jeweils ein die Lichtleitung zwischen benachbarten Küvetteneinheiten (30) behinderndes Ausstreufenster (64,58) aufweisen.

15. Meßanordnung nach Anspruch 14, **dadurch gekennzeichnet**, daß die rückseitigen Ausstreufenster (58) zugleich als an den Verbindungsstegen (48) stufenförmig zurückstehende oder vorspringende Transportanschläge ausgebildet sind, die über eine Auflaufschräge (60) mit einer Schaltklinke des Schrittschaltwerks in Eingriff kommen.

16. Meßanordnung nach Anspruch 14, **dadurch gekennzeichnet**, daß die meßfensterseitigen Ausstreufenster (64) zugleich als Rastsicken für den Eingriff eines die Schaltschrittlage der Mehrfachküvette (14) sichernden Kugeldruckstücks ausgebildet sind.

17. Meßanordnung nach einem der Ansprüche 10 bis 16, **dadurch gekennzeichnet**, daß die Mehrfachküvette (14) außermittig angeordnete, an den Verbindungsstegen (46,48) ausgebildete, nach unten geöffnete Zentrierausnehmungen (66) für den Eingriff einer Zentriergabel aufweist.

18. Meßanordnung nach einem der Ansprüche 1 bis 17, **dadurch gekennzeichnet**, daß die Küvetteneinheiten (30) einen von ihrer Meßfensterseite (42) zur gegenüberliegenden Rückseite (44) hin nach unten geneigten Boden (38) aufweisen.

19. Meßanordnung nach einem der Ansprüche 8 bis 18, **dadurch gekennzeichnet**, daß die Trennstation (28) eine in den Beschickungsbereich einführbare Einspritznadel (82) für Waschflüssigkeit und eine im rückwärtigen Bereich der Küvetteneinheit bis zum Küvettenboden (38) eintauchbare Absaugnadel (84) aufweist.

20. Verfahren zur luminometrischen Reihenanalyse, bei welchem eine mit einer zu untersuchende Reaktionskomponenten und diese bindende magnetisierbare Trägerpartikel enthaltenden Flüssigprobe (12) befüllte Probenkammer (30) in einer Förderstrecke (16) zu einer Lumineszenz-Meßstelle (18) transportiert wird, wobei im Zuqe des Transports die Trägerpartikel während einer Trennphase unter der Einwirkung eines Magnetfelds (80) in einem Sammelbereich (90) der Probenkammerwand (31) angehäuft und in einem die Trennphase abschließenden Waschprozeß überschüssige Reaktionskomponenten aus der Probenkammer (30) entfernt werden, **dadurch gekennzeichnet,** daß die Trägerpartikel während der Trennphase unter Einwirkung von mindestens zwei die Probenkammer (30) zeitlich nacheinander und abwechselnd von gegenüberliegenden Wandbereichen (42,44) her durchdringenden Magnetfeldern (50) zwischen zwei räumlich getrennten Sammelbereichen (90,91) durch die Flüssigprobe hindurchgezogen werden.

21. Verfahren nach Anspruch 20, **dadurch gekennzeichnet,** daß die Trägerpartikel unter der Einwirkung von rotierenden Magnetfeldern (80) auf Spiralbahnen durch die Flüssigprobe (12) hindurchgezogen und in den Sammelbereichen (90,91) als Pellet (92) angehäuft werden.

22. Verfahren nach Anspruch 21, **dadurch gekennzeichnet,** daß der Waschprozeß bei als Pellet (92) an der Probenkammerwand (31) angelagerten Magnetpartikeln unter Aufrechterhaltung des rotierenden Magnetfelds (80) durch Einspritzen und Absaugen einer Waschflüssigkeit ausgeführt wird.

23. Verfahren nach einem der Ansprüche 20 bis 22, **dadurch gekennzeichnet**, daß im Zuge des Transports der Probenkammer (30) mehrere hintereinanderfolgende Trennphasen und Waschprozesse ausgeführt werden.

24. Verfahren nach einem der Ansprüche 20 bis 23, **dadurch gekennzeichnet,** daß mehrere Probenkammern als reihenförmig miteinander verbundene, vorzugsweise dreiseitig-prismatisch geformte Küvetteneinheiten (30) einer Mehrfachküvette (14) gleichzeitig in der Förderstrecke (16) transportiert werden.

25. Verfahren nach Anspruch 24, **dadurch gekennzeichnet**, daß mehrere Mehrfachküvetten (14) hintereinander in die Förderstrecke (16) eingeführt und als zusammenhängender Küvettenzug in ihrer Längsrichtung schrittweise in der Förderstrecke (16) transportiert werden.

## Claims

1. Measuring system for performing luminometric series analyses on liquid samples (12) containing reaction components to be investigated and magnetizable carrier particles binding them, with a sample chamber (30) that contains the liquid sample and can be transported on a conveyor (16) to a measuring station (18), a permanent magnet (68) that acts during transport with its magnetic field (80) on sample chambers (30), as well as a separating station (28) preferably equipped with a suction and rinsing device for removing the surplus reaction components separated from the carrier particles that are accumulated under the influence of a magnetic field (80) on a wall area of sample chamber (30),
**characterised by** a multiple cuvette (14) that consists of cuvette units (30) connected together in a row and each forming a sample chamber, and at least two permanent magnets (20-27) located at intervals along conveyor (16), said magnets penetrating cuvette units (30) transported past them sequentially and alternately from wall areas (40, 44) opposite one another with their magnetic fields (88, 80)'.

2. Measuring system according to claim 1, **characterised in** that each permanent magnet, as a double magnet (68), consists of two preferably cylindrical bar magnets (70) that are mounted parallel to one another with opposite polarity, and that double magnets (68) are rotatable by means of a rotary drive (76) around a rotational axis (78) that is centrally axially parallel with respect to bar magnets (70), is preferably horizontal, and extends transversely to conveyor (16).

3. Measuring system according to claim 2, **characterised in** that the two bar magnets (70) of each double magnet (68) which preferably consist of a metal alloy of the rare earths are coupled magnetically at their unlike poles facing away from conveyor (16) by a yoke (72).

4. Measuring system according to claim 2 or 3, **characterised in** that the two bar magnets (70) of each double magnet (68) are rigidly connected together by a separating layer (74), preferably consisting of plastic, with a distance between them that approximately corresponds to the cross sections of cuvette units (30).

5. Measuring system according to one of claims 2 to 4, **characterised in** that double magnets (68; 21-27) are arranged at the spacing of adjacent cuvette units (30) of multiple cuvette (14) along conveyor (16).

6. Measuring system according to one of claims 2 to 5, **characterised in** that a nonrotatable double magnet (20) is located horizontally at the beginning of conveyor (16), the bar magnets of said magnet being mounted approximately at the spacing of two adjacent cuvette units (30).

7. Measuring system according to one of claims 2 to 6, **characterised by** at least one group (22,23,24;25,26,27) of three double magnets being located next to one another along the conveyor, of which the last two in the transport direction are located on the same side and the first is located on the opposite side of conveyor (16), and by a separating station located at the position (position 6,9) of the last double magnet (24,27).

8. Measuring system according to one of claims 1 to 7, **characterised in** that cuvette units (30) have a lower measuring chamber area (32) and a loading area (36) located above and expanding upward to form a loading opening (34).

9. Measuring system according to one of claims 1 to 8, **characterised in** that cuvette units (30) are made trapezoidal or triangular in cross section and have a transparent optical measuring window (40) that covers measuring chamber area (32) on one side wall (31).

10. Measuring system according to claim 8 or 9, **characterised in** that multiple cuvette (14), preferably made as a one-piece molded part from plastic, has 4 to 8 and preferably 6 cuvette units (30) that are rigidly connected together by lateral vertical connecting ribs (46,48) that run at the level of loading area (36) and by horizontal connecting areas (50) that, are located at the level of loading openings (34).

11. Measuring system according to claim 10, **characterised in** that multiple cuvette (14) has insertion bevels (54,56) for insertion into conveyor (16) at its ends formed by vertical cross members (52), said bevels running diagonally with respect to connecting areas (50) and connecting ribs (46) on the measuring window side.

12. Measuring system according to one of claims 1 to 11, **characterised in** that multiple cuvette (14) is preferably transportable lengthwise by means of a stepping system in a stepwise motion in conveyor (16).

13. Measuring system according to one of claims 9 to 12, **characterised in** that multiple cuvette (14) has a roughened matte surface, except for the measuring windows (40) of cuvette units (30).

14. Measuring system according to one of claims 10 to 13, **characterised in** that connecting ribs (46, 48) on the measuring window side (42) and the opposite rear side (44) of multiple cuvette (14) each have emission windows (64,58) that prevent Light from passing between adjacent cuvette units (30).

15. Measuring system according to claim 14, **characterised in** that rear emission windows (58) are also formed as transport stops that are recessed or project stepwise at connecting ribs (48), said stops meshing by a ramp (60) with a stepping pawl of the stepping system.

16. Measuring system according to claim 14) **characterised in** that emission windows (64) on the measuring window side are simultaneously designed as latching beads for the engagement of a ball under pressure that secures the position of multiple cuvette (14) in the stepping system.

17. Measuring system according to one of claims 10 to 16, **characterised in** that multiple cuvette (14) has centring recesses (66) for the engagement of a centring fork, said recesses being located eccentrically on multiple cuvette (14) and formed on connecting ribs (46,48), as well as being open toward the bottom.

18. Measuring system according to one of claims 1 to 17, **characterised in** that cuvette units (30) have a floor (38) that slopes downward from their measuring window sides (42) to the opposite rear sides (44).

19. Measuring system according to one of claims 8 to 18, **characterised in** that separating station (28) has an injection needle (82), insertable into the loading area, for rinsing fluid and a suction needle (84) that can be submerged in the rear area of the cuvette unit down to cuvette bottom (38).

20. Method for luminometric series analyses in which a sample chamber (30) filled with a Liquid sample (12), containing reaction components to be investigated and magnetizable carrier particles binding the latter, is transported in a conveyor (16) to a luminescence measuring station (18), with the carrier particles being accumulated during transport under the action of a magnetic field (80) during a separating phase in a collecting area (90) of sample chamber wall (31) and with excess reaction components being removed from sample chamber (30) in a rinsing process that follows the separating phase, **characterised in** that the carrier particles, under the influence of at least two magnetic fields (80) that penetrate the sample chambers (30) sequentially in time and alternately from opposite wall areas (42,44) are drawn through the liquid sample during the separating phase between two collecting areas (90,91) separated in space.

21. Method according to claim 20, **characterised in** that the carrier particles are drawn along spiral paths through Liquid sample (12) under the influence of rotating magnetic fields (80) and are accumulated in collecting areas (90,91) as pellets (92).

22. Method according to claim 20 or 21, **characterised in** that the rinsing process is performed with the magnetic particles accumulated as pellets (92) on sample chamber wall (31) by injecting and drawing off a rinsing fluid under suction while maintaining rotating magnetic field (80).

23. Method according to one of claims 20 to 22, **characterised in** that a plurality of successive separating phases and rinsing processes is performed in the course of the transport of sample chambers (30).

24. Method according to one of claims 20 to 23, **characterised in** that a plurality of sample chambers is transported simultaneously in conveyor (16) in the form of cuvette units (30) that are connected together in series and are preferably shaped to be trilateral or prismatic.

25. Method according to claim 24, **characterised in** that a plurality of multiple cuvettes (14) are introduced sequentially into conveyor (16) and are transported as a connected train of cuvettes lengthwise and stepwise in conveyor (16).

## Revendications

1. Agencement de mesure permettant d'effectuer des analyses luminométriques en série sur des composants réactifs à analyser et sur des échantillons liquides (12) comportant des particules porteuses magnétisables liant ces composants, avec une chambre à échantillons (30) recevant l'échantillon liquide transportable dans une voie de transport (16) vers une station de mesure (18), avec un aimant permanent (68) agissant sur la chambre à échantillons (30) avec son champ magnétique (80), au fur et à mesure du transport, ainsi qu'une station de séparation (28), munie de préférence d'un dispositif d'aspiration et de nettoyage pour retirer les composants réactifs en excès séparés des particules porteuses accumulées sur une partie de la paroi de la chambre à échantillons (30) sous l'effet du champ magnétique (80), **caractérisé par** une cuve multiple (14) composée d'unités de cuves (30) raccordées entre elles en série et formant respectivement une chambre à échantillons, et par au moins deux aimants permanents (20-27) placés à intervalle le long de la voie de transport (16), aimants qui, avec leur champ magnétique (88, 80), traversent les unités de cuves (30) transportables devant eux les unes après les autres et par alternance depuis des parties de parois (40, 44) opposées.

2. Agencement de mesure selon la revendication 1, **caractérisé en ce que** chaque aimant permanent est comme un aimant double (68) composé de deux barreaux aimantés (70) de préférence cylindriques, disposés en parallèle avec une polarité contraire, et en ce que les aimants doubles (68) sont pivotants au moyen d'un entraînement rotatif (76) autour d'un axe (78) s'étendant de manière centrée et parallèle à l'axe par rapport aux barreaux aimantés (70), de préférence horizontalement et transversalement à la voie de transport (16).

3. Agencement de mesure selon la revendication 2, **caractérisé en ce que** les deux barreaux aimantés (70) de chaque aimant double (68), composés de préférence d'un alliage métallique des terres rares, sont couplés magnétiquement sur leurs pôles de polarité contraire opposés à la voie de transport (16) à l'aide d'une culasse (72).

4. Agencement de mesure selon la revendication 2 ou 3, **caractérisé en ce que** les deux barreaux aimantés (70) de chaque aimant double (68) sont raccordés l'un à l'autre de façon rigide par une couche de séparation (74) de préférence en plastique avec un écart correspondant environ à la largeur intérieure de la section des unités de cuves (30).

5. Agencement de mesure selon l'une des revendications 2 à 4, **caractérisé en ce que** les aimants doubles (68 ; 21-27) sont placés à intervalles des unités de cuves adjacentes (30) de la cuve multiple (14) le long de la voie de transport (16).

6. Agencement de mesure selon l'une des revendications 2 à 5, **caractérisé en ce qu**'un aimant double (20) non pivotant est placé horizontalement au début de la voie de transport (16), aimant dont les barreaux aimantés sont écartés environ de l'intervalle entre deux unités de cuves (30) adjacentes.

7. Agencement de mesure selon l'une des revendications 2 à 6, **caractérisé par** au moins un groupe (22, 23, 24 ; 25, 26, 27) de trois aimants doubles adjacents l'un par rapport à l'autre le long de la voie de transport (16), dont les deux derniers en sens de transport sont disposés sur le même côté et le premier est disposé sur le côté opposé de la voie de transport (16) opposé à ce côté, et par une station de séparation (28) placée à la position (position 6, 9) du dernier aimant double (24, 27).

8. Agencement de mesure selon l'une des revendications 1 à 7, **caractérisé en ce que** les unités de cuves (30) présentent une partie inférieure de chambre de mesure (32) et une partie de chargement (36) placée au-dessus et s'élargissant vers le haut vers une ouverture de chargement (34).

9. Agencement de mesure selon l'une des revendications 1 à 8, **caractérisé en ce que** les unités de cuves (30) ont une section en forme de trapèze ou de triangle et présentent une fenêtre de mesure visuelle transparente, recouvrant la partie de la chambre de mesure (32) sur une paroi latérale (31).

10. Agencement de mesure selon la revendication 8 ou 9, **caractérisé en ce que** la cuve multiple (14), formée de préférence comme pièce plastique formée en une seule partie, présente de quatre à huit, de préférence six, unités de cuves (30) qui sont raccordées entre elles de façon rigide à l'aide de nervures de raccordement (46, 48) verticales et latérales, à hauteur des parties de chargement (36), et de surfaces de raccordement (50) horizontales supérieures, formées à hauteur des ouvertures de chargement (34).

11. Agencement de mesure selon la revendication 10, **caractérisé en ce que** la cuve multiple (14) présente des parties d'introduction obliques (54, 56) sur ses extrémités frontales, formées par des nervures transversales (52) verticales, mises respectivement obliquement par rapport aux surfaces de raccordement (50) et aux nervures de raccordement (46) du côté de la fenêtre de mesure, pour l'introduction dans la voie de transport (16).

12. Agencement de mesure selon l'une des revendications 1 à 11, **caractérisé en ce que** la cuve multiple (14) est transportable dans la voie de transport (16) de préférence au moyen d'un mécanisme d'avancement graduel dans un mouvement pas à pas dans son sens longitudinal.

13. Agencement de mesure selon l'une des revendications 9 à 12, **caractérisé en ce que** la cuve multiple (14) présente une surface mate et rugueuse préservant la fenêtre de mesure (40) des unités de cuves (30).

14. Agencement de mesure selon l'une des revendications 10 à 13, **caractérisé en ce que** les nervures de raccordement (46, 48) présentent respectivement du côté des fenêtres de mesure (42) et au dos (44) de la cuve multiple (14) situé à l'opposé, une fenêtre de diffusion (64, 58) empêchant la lumière d'être conduite entre des unités de cuves (30) adjacentes.

15. Agencement de mesure selon la revendication 14, **caractérisé en ce que** les fenêtres de diffusion (58) placées au dos sont formées en même temps comme des butées de transport en forme de marches en retrait ou dépassant sur des nervures de raccordement (48), butées qui ont prise avec un cliquet du mécanisme d'avancement graduel sur une pente de butée (60).

16. Agencement de mesure selon la revendication 14, **caractérisé en ce que** les fenêtres de diffusion (64) du côté de la fenêtre de mesure sont formées en même temps comme des nervures à crans pour la prise d'une pièce de pression à bille assurant la position du mouvement graduel de la cuve multiple (14).

17. Agencement de mesure selon l'une des revendications 10 à 16, **caractérisé en ce que** la cuve multiple (14) présente des creux de centrage (66), ouverts vers le bas, placés de manière excentrique et formés sur les nervures de raccordement (46, 48), pour la prise d'une fourche de centrage.

18. Agencement de mesure selon l'une des revendications 1 à 17, **caractérisé en ce que** les unités de cuves (30) présentent un fond (38) incliné vers le bas de leur côté de la fenêtre de mesure (42) au dos (44) opposé.

19. Agencement de mesure selon l'une des revendications 8 à 18, **caractérisé en ce que** la station de séparation (28) présente une aiguille d'injection (82) pouvant être introduite dans la partie de chargement pour du liquide de lavage et une aiguille d'aspiration (84) pouvant être plongée dans la partie au dos de l'unité de cuve jusqu'au fond (38) de la cuve.

20. Procédé permettant d'effectuer des analyses luminométriques en série, dans lequel une chambre à échantillons (30) remplie avec un échantillon liquide (12) contenant des composants réactifs à analyser et des particules porteuses magnétisables liant ces composants, est transportée dans une voie de transport (16) vers un poste de mesure de la luminescence (18), les particules porteuses étant accumulées sous l'action d'un champ magnétique (80) dans une zone collectrice (90) de la paroi de la chambre à échantillons (31) au cours du transport pendant une phase de séparation, et dans lequel les composants réactifs en excès sont retirés de la chambre à échantillons (30) lors d'un processus de lavage terminant la phase de séparation, **caractérisé en ce que** les particules porteuses sont entraînées à travers l'échantillon liquide pendant la phase de séparation sous l'action d'au moins deux champs magnétiques (80) traversant la chambre à échantillons (30) l'un après l'autre et par alternance depuis des parties latérales de paroi (42, 44) entre deux zones collectrices (90, 91) séparées dans l'espace.

21. Procédé selon la revendication 20, **caractérisé en ce que** les particules porteuses, sous l'effet de champs magnétiques rotatifs (80), sont entraînées à travers l'échantillon liquide (12) sur des voies en spirales et accumulées comme boulettes (92) dans les zones collectrices (90, 91).

22. Procédé selon la revendication 21, **caractérisé en ce que** le procédé de lavage est réalisé pour des particules magnétiques déposées comme des boulettes (92) sur la paroi de la chambre à échantillons (31) par injection et aspiration d'un liquide de lavage, le champ magnétique rotatif (80) étant maintenu.

23. Procédé selon l'une des revendications 20 à 22, **caractérisé en ce que** plusieurs phases de séparation et procédés de lavage successifs sont exécutés au cours du transport de la chambre à échantillons (30).

24. Procédé selon l'une des revendications 20 à 23, **caractérisé en ce que** plusieurs chambres à échantillons sont transportées en même temps dans la voie de transport (16) comme unités de cuves (30) d'une cuve multiple (14) raccordées entre elles par rangées, de préférence de forme prismatique trilatérale.

25. Procédé selon la revendication 24, **caractérisé en ce que** plusieurs cuves multiples (14) sont introduites successivement dans la voie de transport (16) et transportées de manière homogène et pas à pas dans la voie de transport (16) comme un train de cuves dans leurs sens longitudinal.
